# EUROPÄISCHE PATENTSCHRIFT

(11) **EP 2 025 627 B1**
(45) Veröffentlichungstag und Bekanntmachung des Hinweises auf die Patenterteilung: **30.01.2013**
(21) Anmeldenummer: 08450118.8
(22) Anmeldetag: 30.07.2008
(51) Int. Cl.: B65G 17/40

(54) **Quertransporter**
Cross-transporter
Transporteur transversal

(30) Priorität: 03.08.2007 AT 12232007
(43) Veröffentlichungstag der Anmeldung: 18.02.2009
(73) Patentinhaber: Springer Maschinenfabrik AG, 9360 Friesach (AT)
(72) Erfinder: Roth, Heinz, 9360 Friesach (AT); Ebner, Franz, 9833 Rangersdorf (AT)
(74) Vertreter: Gibler & Poth Patentanwälte OG

(56) Entgegenhaltungen:
- FR-A1- 2 484 968
- US-A- 4 164 248
- US-A- 5 865 080

## Beschreibung

Die Erfindung betrifft einen Quertransporter gemäß dem Oberbegriff des Patentanspruches 1. Bekannte derartige Quertransporter weisen Mitnehmerelemente zur Vereinzelung des Stückgutes auf, wobei die Stückgüter hintereinander und voneinander beabstandet transportiert werden.

Aufgabe der Erfindung ist es, einen Quertransporter der eingangs genannten Art derart weiterzubilden, dass eine Bearbeitung oder eine Sortierung der einzelnen Stückgüter mit hoher Flexibilität und mit hohem Stückgutdurchsatz gewährleistet werden kann. Erfindungsgemäß wird dies durch die Merkmale des Patentanspruches 1 erreicht.

Dabei ergibt sich der Vorteil, dass für einzelne Stückgüter eine unterschiedliche Transporthöhe eingestellt werden kann, wobei die Stückgüter auf einfache Weise mit einer Arbeitsstation in Kontakt gebracht werden können, oder an dieser vorbeigeführt werden können. Dabei kann diese Entscheidung für jedes der Stückgüter einzeln getroffen werden. Die Maschinen der Arbeitsstationen brauchen dabei nicht bewegt zu werden. Üblicherweise ist die Masse eines Stückgutes erheblich geringer als die der Maschinen einer Arbeitsstation, die bei dem Transport in einer Ebene bewegt werden müssten, um lediglich einen Teil des Stückgutes zu bearbeiten. Weiters kann der Abstand zwischen zwei Stückgütern gering gewählt werden, da es nicht erforderlich ist, dass bei der Bearbeitung eines der Stückgüter die Vorrichtungen einer Arbeitsstation nach der Bearbeitung aus der Förderebene bewegt werden können, bevor das nachfolgende Stückgut mit der Vorrichtung in Eingriff ist.

Dadurch dass das Mitnehmerelement und die Auflage relativ zueinander bewegbar ausgebildet sind, können das Mitnehmerelement und die Auflage bei der Einstellung der Transporthöhe unabhängig voneinander bewegt und/oder geführt werden. Insbesondere kann dabei das Mitnehmerelement derart ausgebildet sein, dass das Mitnehmerelement bei der Einstellung der Transporthöhe des Stückgutes relativ zum Förderband bewegungsfrei ausgebildet ist. Dadurch kann die Einstellung der Transporthöhe des Stückgutes einfach und schnell erfolgen, wobei im Wesentlichen lediglich die Auflage relativ zum Fördermittel bewegt wird und womit die zur Einstellung der Transporthöhe zu bewegende Masse besonders gering und der Quertransporter besonders einfach ausgebildet sein kann.

Die unabhängige Bewegung des Mitnehmerelements und der Auflage ermöglicht einer besonders sichere Führung des Stückgutes. Dabei kann die sichere Führung auch bei und während der Einstellung der Transporthöhe des Stückgutes gewährleistet werden. Dadurch kann der Quertransporter insbesondere bei der als Sortieranlage ausgebildeten Arbeitsstation verwendet werden, womit eine zuverlässige Sortierung gewährleistet sein kann.

Die Unteransprüche, welche ebenso wie der Patentanspruch 1 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen Ausführungsformen beispielhaft dargestellt sind, näher beschrieben. Dabei zeigt:
Fig. 1 eine Ansicht in Förderrichtung einer Ausführungsform eines erfindungsgemäßen Querförderers;
Fig. 2 eine Seitenansicht des Querförderers nach Fig. 1; und
Fig. 3 eine Draufsicht des Querförderers nach Fig. 1.

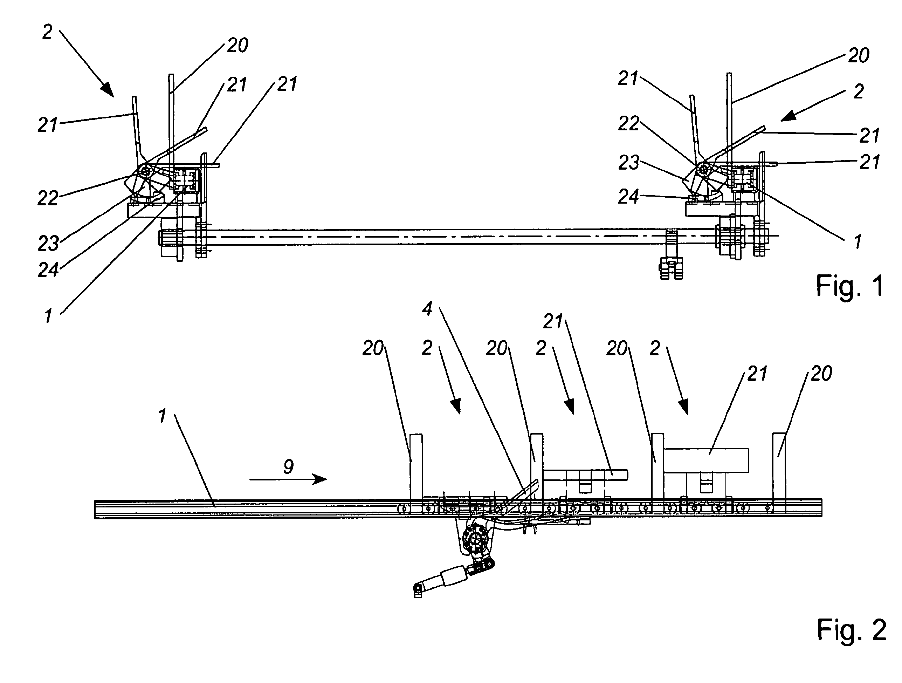

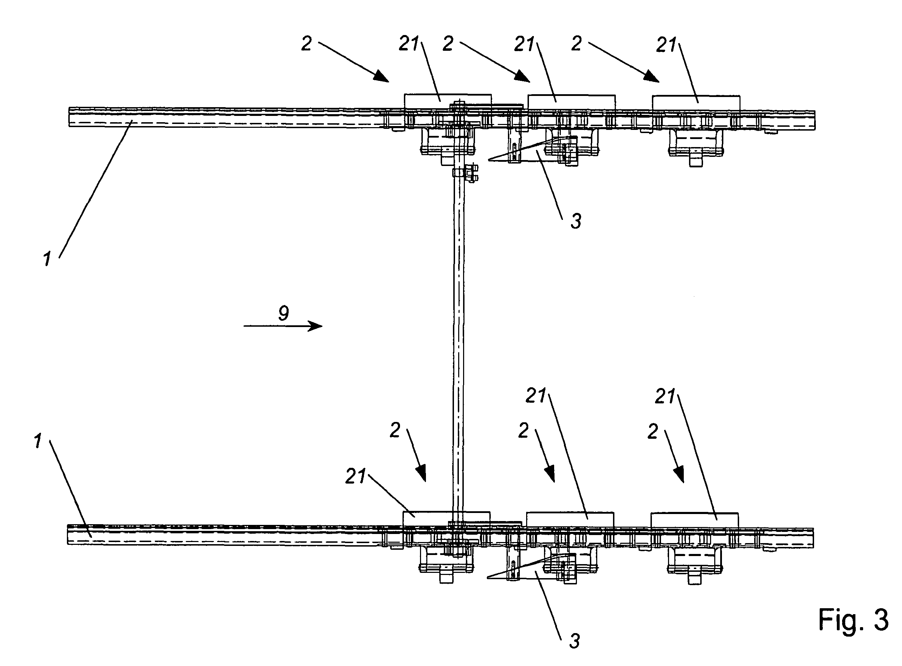

Die Fig. 1 bis 3 zeigen einen Quertransporter für längliches Stückgut mit wenigstens zwei umlaufenden Fördermitteln 1, insbesondere Ketten, Gurte, Seile, wobei mit den Fördermitteln 1 zumindest eine Mitnehmerauflageeinheit 2 verbunden ist, wobei die Mitnehmerauflageeinheit 2 zumindest ein Mitnehmerelement 20 zum Mitnehmen des Stückgutes umfasst, wobei die Mitnehmerauflageeinheit 2 zumindest eine Auflage 21 zur Einstellung einer unterschiedlichen Transporthöhe des Stückgutes umfasst und wobei das Mitnehmerelement 20 und die Auflage 21 zur Einstellung der unterschiedlichen Transporthöhe relativ zueinander bewegbar ausgebildet sind.

Abhängig von der Masse und der Länge des zu transportierenden Stückgutes können auch mehr als zwei umlaufende Fördermitteln 1 vorgesehen sein.

Insbesondere bilden zumindest ein Mitnehmerelement 20 und eine unmittelbar zu diesem benachbarte Auflage 21 jeweils eine Mitnehmerauflageeinheit 2.

Die Auflage 21 ist höhenverstellbar ausgebildet. Mittels der höhenverstellbaren Auflage 21 kann eines der Stückgüter unabhängig von den anderen Stückgütern angehoben bzw. abgesenkt werden. Dabei kann für dieses Stückgut in einem Arbeitsbereich vorgegeben werden, ob es einem Arbeitsschritt unterworfen wird. Beispielsweise kann es in einem Kappbereich bei abgesenkter Auflage 21 abgekappt werden und bei angehobener Auflage 21 oberhalb der Kappsägen über diesen transportiert werden, wobei die Kappsägen selbst nicht in der Höhe bewegt werden müssen. Ebenso kann der Arbeitsbereich als Sortieranlage ausgebildet sein, wobei unterschiedliche vorbestimmte Transporthöhen die Sortierung, beispielsweise auf mehrere weitere Fördermitteln und/oder Transporter, ermöglichen. Insbesondere können - wie in den Fig. 1 bis 3 dargestellt - 3 Transporthöhen für drei Sortierebenen ausgebildet sein. Dabei kann eine einfache Ausgestaltung des Arbeitsbereiches, des Abkappens und/oder des Sortierens erreicht werden.

Das Mitnehmerelement 20 ist im Wesentlichen nicht höhenverstellbar ausgebildet, wobei vorgesehen sein kann, dass das

Vorteilhafterweise kann die Auflage 21 im Wesentlichen normal zur Förderrichtung des geförderten Stückgutes höhenverstellt werden, wobei die Auflage 21 im Wesentlichen lediglich normal zur Förderrichtung relativ zum Mitnehmerelement 20 bewegbar ist. Vorteilhaft dabei ist, dass sich die Transportgeschwindigkeit des geförderten Stückgutes beim Anheben oder beim Absenken dieses Stückgutes nicht ändert. Vorteilhafterweise ändert sich dabei die Transportgeschwindigkeit, also die Geschwindigkeit in Transportrichtung, des Stückgutes nicht. Beim Anheben oder beim Absenken eines einzelnen Stückgutes relativ zu einem weiteren Stückgut, kann somit auch der Abstand in Transportrichtung zwischen diesen beiden geförderten Stückgütern konstant bleiben. Dies bringt Vorteile in der Taktbarkeit aufeinanderfolgender Bearbeitungsschritte am Stückgut.

Ebenso können beim Anheben und beim Absenken des Stückgutes, an diesem Stückgut auftretende Beschleunigungskräfte gering gehalten werden, womit das Anheben und/oder das Absenken, also die Veränderung der Transporthöhe, des Stückgutes besonders schnell erfolgen kann und womit eine hohe Stückgut-Fördergeschwindigkeit und/oder ein hoher Stückgut-Förderdurchsatz gewährleistet werden kann.

In einer alternativen Ausführung des Quertransporters kann das Stückgut bei angehobener Auflage 21 dem Arbeitsschritt unterworfen werden. Beispielsweise können die Kappsägen von oben in den Arbeitsbereich ragen, womit bei abgesenkter Auflage 21 das Stückgut unterhalb der und ohne ein Zusammenwirken mit diesen Kappsägen hindurch transportiert werden können.

In Weiterführung der Erfindung kann vorgesehen sein, dass das Mitnehmerelement 20 verschiebefest und/oder rotationsfest mit dem Fördermittel 1 verbunden ist. Derart kann der Quertransporter besonders einfach und kostengünstig ausgebildet sein. Zur Einstellung der Transporthöhe wird dabei lediglich die Auflage 21 geführt und/oder bewegt, wobei die Auflage 21 zumindest bereichsweise relativ zum Mitnehmerelement 20 bewegt wird. Dabei können insbesondere das Mitnehmerelement 20 und die Auflage 21 einer Mitnehmerauflageeinheit 2 in Förderrichtung im Wesentlichen relativbewegungsfrei ausgebildet sein, wobei der Abstand des Mitnehmerelementes 20 zur Auflage 21 in Förderrichtung 9 zumindest im Arbeitsbereich der Arbeitsstation im Wesentlichen konstant sein kann. Dieser Abstand zwischen Mitnehmerelement 20 und Auflage 21 der Mitnehmerauflageeinheit 2 kann beispielsweise zwischen 1cm und 5cm betragen, womit gewährleistet sein kann, dass das Mitnehmerelement 20 die Bewegung der Auflage 21 zur Einstellung der Transporthöhe nicht behindert. Dazu kann vorteilhafterweise vorgesehen sein, dass die Auflage 21 verschiebbar und/oder rotierbar mit dem Fördermittel 1 verbunden ist.

Alternativ kann die Auflage 21 der Mitnehmerauflageeinheit 2 verschiebbar und/oder rotierbar mit dem Mitnehmerelement 20 verbunden sein. Dabei kann weiterhin der relativ zum Mitnehmerelement 20 bewegliche Teil der Auflage 21 in Förderrichtung 9 im Wesentlichen 1cm bis 5cm beabstandet ausgebildet sein. Dadurch kann die Anzahl der Befestigungsstellen am Fördermittel 1 reduziert werden, wobei weiterhin gewährleistet sein kann, dass das Mitnehmerelement 20 die Bewegung der Auflage 21 zur Einstellung der Transporthöhe nicht behindert. Die Einstellung der Transporthöhe kann besonders zügig erfolgen, womit auch bei großer Fördergeschwindigkeit, bei hohem Förderdurchsatz und/oder bei geringem Abstand zwischen den beförderten Stückgütern für jedes dieser Stückgüter die Transporthöhe individuell und zuverlässig eingestellt werden kann.

In Weiterführung der Erfindung kann - wie in den Fig. 1 bis 3 dargestellt - vorgesehen sein, dass die Auflage 21 um eine Drehachse 22 verschwenkbar ist, wodurch eine Höhenverstellung der Auflage 21 und damit des Stückgutes einfach und schnell erreicht werden kann. Durch eine Verschwenkung kann das Stückgut einfach und schnell angehoben und/oder abgesenkt werden.

Bei einer anderen Ausführungsform kann die Auflage 21 auch verschiebbar gelagert sein, womit die Höhenverstellung, also die Einstellung der Transporthöhe des Stückgutes, durch eine Translation erreicht werden kann. Dabei kann vorteilhafterweise ein erstes Teil, insbesondere eine Hülse, ein Zylinder, ein Vierkant und/oder ein Bolzen, der Auflage 21 verschiebefest und/oder rotationsfest mit dem Fördermittel 1 verbunden sein. Ein zweites Teil, insbesondere eine Rundhülse, eine Vierkanthülse, ein Zylinder und/oder ein Bolzen, der Auflage 21 kann verschiebbar in oder verschiebbar über das erste Teil gesteckt sein, wobei die Verschiebung insbesondere in Richtung der Transporthöhe erfolgen kann. Das zweite Teil kann darüber hinaus auf einem Ende eine Kontaktfläche zum Zusammenwirken mit dem Stückgut, insbesondere eine Kappe, eine Kontaktplatte oder eine Kontaktebene aus Holz, Kunststoff oder Metall, umfassen. Die Höhenverstellung kann dabei mittels eines im Wesentlichen parallelen Verschiebens des zweiten Teils gegenüber des ersten Teils erfolgen, wobei in den unterschiedlichen Transporthöhen der Kontakt zwischen Auflage und Stückgut im Wesentlichen gleichartig ausgebildet sein kann. Derart können auch unebene Stückgüter und/oder - bei der Beförderung mittels des Quertransporters gesehen - Stückgüter, bei welchen lediglich bestimmte Stellen im Bereich der unteren Fläche des Stückgutes für ein Aufliegen geeignet sind, zuverlässig in vorbestimmten unterschiedlichen Transporthöhen gefördert werden.

Bei wieder anderen Ausführungsformen kann auch eine Kombination einer Rotation und einer Translation bei der Höhenverstellung der Auflage 21 vorgesehen sein.

Gemäß einer weiteren Ausführungsform der Erfindung kann vorgesehen sein, dass die Drehachse 22 im Wesentlichen parallel zur Förderebene und parallel zur Förderrichtung 9 angeordnet ist, wodurch die Höhenverstellung besonders einfach durchgeführt werden kann. Bei einem im Wesentlichen linienförmigen Fördermittel 1 entspricht die Förderrichtung 9 der Längsrichtung des Fördermittels 1 Die Förderebene ist die Ebene, in der das Stückgut transportiert wird und unterschiedliche Transporthöhen können unterschiedliche Förderebenen ausbilden. Dabei ist jeweils der Bereich des Fördermittels 1 zu betrachten, auf dem das Stückgut transportiert werden soll.

In Weiterbildung der Erfindung kann vorgesehen sein, dass die Mitnehmerauflageeinheit 2 ein Stellelement 23 zur Höhenverstellung der Auflage 21, insbesondere ein Hebelelement, umfasst. Dabei kann durch Betätigung des Stellelementes 23 die Höhe der Auflage 21, insbesondere die Höhe des Kontaktes der Auflage 21 mit dem Stückgut, verändert werden, wobei durch Führung des Stellelementes 23 die Auflage 21, insbesondere der Kontaktbereich der Auflage 21 und des Stückgutes, in einer vorgebbaren Höhe gehalten werden kann. Mit dem Stellelement 23 kann die Höhenverstellung besonders einfach erfolgen.

Gemäß einer weiteren Ausgestaltung der Erfindung kann vorgesehen sein, dass an dem Stellelement 23 eine Führungsrolle 24 angeordnet ist, wodurch die auftretende Reibung bei der Führung des Stellelementes 23 besonders gering gehalten werden kann.

Gemäß einer anderen Ausbildung der Erfindung kann vorgesehen sein, dass er eine Kulisse 3 zum Zusammenwirken mit dem Stellelement 23, insbesondere mit der Führungsrolle 24, aufweist. Die Führung des Stellelementes 23 kann insbesondere mittels der Kulisse 3 erfolgen, wobei vorteilhafterweise für unterschiedliche Höhen der Auflage 21, und somit für unterschiedliche Transporthöhen, Förderhöhen und Förderebenen, mehrere Kulissen 3 vorgesehen sein können. Mittels der Kulisse 3 können vorgebbare Förderhöhen stabilisiert und über eine vorgebbare Strecke gehalten werden.

In diesem Zusammenhang kann in weiterer Ausgestaltung der Erfindung vorgesehen sein, dass eine verstellbare Weiche 4 zum Führen des Stellelementes 23 in die Kulisse 3 vorgesehen ist. Mittels der verstellbaren Weiche 4 kann das Stellelement 23 auf einfache Weise selektiv in die Kulisse 3 hineingeführt werden. Dabei kann für jede Auflage 21 individuell vorgegeben werden, ob und gegebenenfalls in welche Kulisse 3 das Stellelement 23, insbesondere die Führungsrolle 24, geführt werden soll. Weiters kann mittels der Weiche 4 sichergestellt werden, dass das Stellelement 23 zuverlässig in die Kulisse 3 geführt wird, wobei dies auch bei Maßungenauigkeiten des Stellelementes 23 der Fall ist. Mittels der verstellbaren Weiche 4 kann derart für jedes Stückgut individuell und zuverlässig die Förderhöhe vorgegeben und anschließend realisiert werden.

In weiterer Ausbildung der Erfindung kann vorgesehen sein, dass die Kulisse 3 entlang eines Arbeitsbereiches, beispielsweise eines Ausrichtbereiches, eines Sortierbereiches, eines Sägebereiches, eines Stanzbereiches oder eines Kappbereiches, angeordnet ist, wodurch entlang des gesamten Arbeitsbereiches die Förderhöhe des Stückgutes auf einfache Weise konstant gehalten werden kann. Dabei kann das Stückgut selektiv einem Arbeitsschritt in dem Arbeitsbereich unterzogen werden, indem das Stückgut gegebenenfalls aus dem Eingriff mit im Arbeitsbereich angeordneten Vorrichtungen gebracht wird. Dabei können die Vorrichtungen stationär angeordnet werden, wodurch ein einfacher Aufbau des Arbeitsbereiches erreicht werden kann. Ebenso kann die Sortierung einfach erfolgen.

Gemäß einer weiteren Ausführungsform der Erfindung kann vorgesehen sein, dass die Auflage 21 eine Zusatzführung für weitere Förderebenen aufweist. Mit der Zusatzführung kann die Anzahl der auszubildenden Förderebenen erhöht werden, wodurch eine weitere Selektierung der vorzunehmenden Arbeitsschritte erfolgen kann. Dabei kann vorgesehen sein, dass die Auflage 21 auf der Zusatzführung abgestützt wird. Insbesondere mittels weiterer Weichen od. dgl. können auf diese Weise einfach zusätzliche Förderebenen bereitgestellt werden, wobei das Stellelement 23 nicht für das Erreichen der zusätzlichen Förderebenen benötigt wird.

Die Auflage 21 kann, insbesondere mit dem Stellhebel 23, einstückig ausgebildet sein. Dies ermöglicht eine einfache, gewichtsschonende und kostengünstige Ausgestaltung der Auflage 21 und des Stellehebels 23.

Die Auflage 21 kann aus Metall, aus Holz und/oder aus, insbesondere verstärktem, Kunststoff ausgebildet sein.

Alternativ kann die Auflage 21 mehrstückig ausgebildet sein. In diesem Fall kann vorteilhafterweise die Auflage 21 ein Kontaktteil zum Zusammenwirken der Auflage 21 umfassen und das Kontaktteil auswechselbar ausgebildet sein. Derart können unterschiedliche Kontaktteile unterschiedliche Geometrien der Auflage 21 verwirklichen und die Anzahl der auszubildenden Förderebenen kann erhöht werden, wodurch eine weitere Selektierung der vorzunehmenden Arbeitsschritte erfolgen kann.

Ebenso kann vorgesehen sein, dass die Förderebene im Arbeitsbereich in kleinen Höhenunterschieden eingestellt werden kann, womit - beim Fördern im Quertransporter - das Stückgut in lediglich einem Teilbereich der Höhe des Stückgutes mit der Arbeitsstation in Kontakt gebracht werden kann, womit beispielsweise eine Nut in das Stückgut geschnitten und/oder gefräst werden kann.

Zusätzlich können transporthöhenfeste Mitnehmereinheiten ausgebildet sein. Die transporthöhenfesten Mitnehmereinheiten können vorteilhafterweise drehachsenfrei, stellelementfrei und führungsrollenfrei und somit besonders einfach, gewichtsparend und kostengünstig ausgebildet sein. Insbesondere können die transporthöhenfesten Mitnehmereinheiten alternierend und/oder in einem vorbestimmten Zahlenverhältnis zu den Mitnehmerauflageeinheiten 2 entlang des Fördermittels 1 ausgebildet sein. Die Ausbildung von transporthöhenfesten Mitnehmereinheiten und Mitnehmerauflageeinheiten 2 entlang des Fördermittels 1 kann für jenen Fall vorteilhaft sein, wenn beispielsweise nachfolgend jedes zweite, dritte oder vierte der mittels des Quertransporters beförderten Stückgüter konstant in lediglich einer Transporthöhe zu befördern ist, wobei die Anzahl der höhenverstellbaren Auflagen 21 des Quertransporters gering ausgebildet sein kann.

Entlang der Förderrichtung 9 können hintereinander mehrere Arbeitsstationen angeordnet sein. Ein Quertransporter kann derart das Stückgut in den Bereich mehrerer Arbeitsstationen fördern. Dabei kann für jede der mehreren Arbeitsstationen individuell entschieden werden, ob das Stückgut mit der jeweiligen Arbeitsstation in Eingriff gebracht wird oder ob das Stückgut eingriffsfrei durch diese Arbeitsstation hindurchgeführt oder darüber hinweggeführt wird.

Außerhalb des Arbeitsbereiches der Arbeitsstation oder der Arbeitsbereiche der mehreren Arbeitsstationen kann das Mitnehmerelement 20 und/oder die Auflage 21 weggeklappt und/oder versenkt werden. Derart kann das zur Rückführung der Mitnehmerauflageeinheiten 2 benötigte Volumen in einem Bereich des Quertransporters außerhalb des Arbeitsbereiches der Arbeitsstation oder außerhalb der Arbeitsbereiche der mehreren Arbeitsstationen gering gehalten werden, womit eine kompakte Bauform des Quertransporters gewährleistet sein kann.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Quertransporter für längliches Stückgut mit wenigstens zwei umlaufenden Fördermitteln (1), insbesondere Ketten, Gurte, Seile, wobei mit den Fördermitteln (1) zumindest eine Mitnehmerauflageeinheit (2) verbunden ist, wobei die Mitnehmerauflageeinheit (2) zumindest ein Mitnehmerelement (20) zum Mitnehmen des Stückgutes umfasst, **dadurch gekennzeichnet, dass** die Mitnehmerauflageeinheit (2) zumindest eine Auflage (21) zur Einstellung einer unterschiedlichen Transporthöhe des Stückgutes umfasst und dass die Auflage (21) zur Einstellung der unterschiedlichen Transporthöhe relativ zu dem Mitnehmerelement (20) bewegbar ausgebildet ist.

2. Quertransporter nach Anspruch 1, **dadurch gekennzeichnet, dass** das Mitnehmerelement (20) verschiebefest und/oder rotationsfest mit dem Fördermittel (1) verbunden ist.

3. Quertransporter nach Anspruch 1 oder 2, **dadurch gekennzeichnet, dass** die Auflage (21) verschiebbar und/oder rotierbar mit dem Fördermittel (1) verbunden ist.

4. Quertransporter nach Anspruch 1, 2 oder 3, **dadurch gekennzeichnet, dass** die Auflage (21) der Mitnehmerauflageeinheit (2) verschiebbar und/oder rotierbar mit dem Mitnehmerelement (20) verbunden ist.

5. Quertransporter nach einem der Ansprüche 1 bis 4, **dadurch gekennzeichnet, dass** die Auflage (21) um eine Drehachse (22) verschwenkbar ist.

6. Quertransporter nach Anspruch 5, **dadurch gekennzeichnet, dass** die Drehachse (22) im Wesentlichen parallel zur Förderebene und parallel zur Förderrichtung (9) angeordnet ist.

7. Quertransporter nach Anspruch einem der Ansprüche 1 bis 6, **dadurch gekennzeichnet, dass** die Mitnehmerauflageeinheit (2) ein Stellelement (23) zur Höhenverstellung der Auflage (21), insbesondere ein Hebelelement, umfasst.

8. Quertransporter nach Anspruch 7, **dadurch gekennzeichnet, dass** an dem Stellelement (23) eine Führungsrolle (24) angeordnet ist.

9. Quertransporter nach einem der Ansprüche 1 bis 8, **dadurch gekennzeichnet, dass** er eine Kulisse (3) aufweist.

10. Quertransporter nach Anspruch 9, **dadurch gekennzeichnet, dass** die Kulisse (3) zum Zusammenwirken mit dem Stellelement (23), insbesondere mit der Führungsrolle (24), ausgebildet ist.

11. Quertransporter nach Anspruch 9 oder 10, **dadurch gekennzeichnet, dass** eine verstellbare Weiche (4) zum Führen des Stellelementes (23) in die Kulisse (3) vorgesehen ist.

12. Quertransporter nach Anspruch 9, 10 oder 11, **dadurch gekennzeichnet, dass** die Kulisse (3) entlang eines Arbeitsbereiches, insbesondere eines Ausrichtbereiches oder eines Kappbereiches, angeordnet ist.

13. Quertransporter nach einem der Ansprüche 1 bis 12, **dadurch gekennzeichnet, dass** die Mitnehmerauflageeinheit (2) eine Zusatzführung für weitere Förderebenen aufweist.

## Claims

1. A transverse conveyor for elongated piece goods, comprising at least two revolving conveying means (1), especially chains, belts, cables, with at least one driver support unit (2) being connected with the conveying means (1), with the driver support unit (2) having at least one driver element (20) for driving the piece good, **characterized in that** the driver support unit (2) comprises at least one support (21) for setting a different transport height of the piece good, and that the support (21) is arranged to be movable relative to the driver element (20) for setting the different transport height.

2. A transverse conveyor according to claim 1, **characterized in that** the driver element (20) is connected in a non-displaceable and/or rotation-proof manner with the conveying means (1).

3. A transverse conveyor according to claim 1 or 2, **characterized in that** the support (21) is displaceably and/or rotatably connected with the conveying means (1).

4. A transverse conveyor according to claim 1, 2 or 3, **characterized in that** the support (21) of the driver support unit (2) is displaceably and/or rotatably connected with the driver element (20).

5. A transverse conveyor according to one of the claims 1 to 4, **characterized in that** the support (21) is pivotable about a rotational axis (22).

6. A transverse conveyor according to claim 5, **characterized in that** the rotational axis (22) is arranged substantially parallel to the conveying level and parallel to the conveying direction (9).

7. A transverse conveyor according to one of the claims 1 to 6, **characterized in that** the driver support unit (2) comprises an actuating element (23) for the height adjustment of the support (21), especially a lever element.

8. A transverse conveyor according to claim 7, **characterized in that** a guide roller (24) is arranged on the actuating element (23).

9. A transverse conveyor according to one of the claims 1 to 8, **characterized in that** it comprises a connecting link (3).

10. A transverse conveyor according to claim 9, **characterized in that** the connecting link (3) is arranged for cooperating with the actuating element (23), especially the guide roller (24).

11. A transverse conveyor according to claim 9 or 10, **characterized in that** an adjustable switch (4) is provided for guiding the actuating element (23) into the connecting link (3).

12. A transverse conveyor according to claim 9, 10 or 11, **characterized in that** the link (3) is arranged along a working area, especially an alignment area or a lopping area.

13. A transverse conveyor according to one of the claims 1 to 12, **characterized in that** the driver support unit (2) comprises an additional guide for further conveying levels.

## Revendications

1. Convoyeur transversal pour articles unitaires allongés avec au moins deux moyens de transport (1) en continu, en particulier des chaînes, des sangles, des câbles, dans lequel au moins une unité de support d'entraînement (2) est reliée aux moyens de transport (1), dans lequel l'unité de support d'entraînement (2) comprend au moins un élément d'entraînement (20) pour entraîner les articles unitaires, **caractérisé en ce que** l'unité de support d'entraînement (2) comprend au moins un support (21) pour le réglage d'une hauteur de transport différente articles unitaires et **en ce que** le support (21) est conçu pour être mobile par rapport à l'élément d'entraînement (20) en vue de régler la hauteur de transport différente.

2. Convoyeur transversal selon la revendication 1, **caractérisé en ce que** l'élément d'entraînement (20) est relié de manière fixe en translation et/ou fixe en rotation au moyen de transport (1).

3. Convoyeur transversal selon la revendication 1 ou 2, **caractérisé en ce que** le support (21) est relié de manière fixe en translation et/ou fixe en rotation au moyen de transport (1).

4. Convoyeur transversal selon la revendication 1, 2 ou 3, **caractérisé en ce que** le support (21) de l'unité de support d'entraînement (2) est relié de manière fixe en translation et/ou fixe en rotation à l'élément d'entraînement (20).

5. Convoyeur transversal selon l'une des revendications 1 à 4, **caractérisé en ce que** le support (21) est capable de pivotement autour d'un axe de rotation (22).

6. Convoyeur transversal selon la revendication 5, **caractérisé en ce que** l'axe de rotation (22) est disposé de façon sensiblement parallèle au plan de transport et parallèle à la direction de transport (9).

7. Convoyeur transversal selon l'une des revendications 1 à 6, **caractérisé en ce que** l'unité de support d'entraînement (2) comprend un élément de réglage (23) pour le réglage en hauteur du support (21), en particulier un élément de levage.

8. Convoyeur transversal selon la revendication 7, **caractérisé en ce qu'**un galet de guidage (24) est disposé sur l'élément de réglage (23).

9. Convoyeur transversal selon l'une des revendications 1 à 8, **caractérisé en ce qu'**il présente une glissière (3).

10. Convoyeur transversal selon la revendication 9, **caractérisé en ce que** la glissière (3) est conçue pour coopérer avec l'élément de réglage (23), en particulier avec le galet de guidage (24).

11. Convoyeur transversal selon la revendication 9 ou 10, **caractérisé en ce qu'**un aiguillage réglable (4) pour le guidage de l'élément de réglage (23) est prévu dans la glissière (3).

12. Convoyeur transversal selon la revendication 9, 10 ou 11, **caractérisé en ce que** la glissière (3) est disposée le long d'une zone de travail, en particulier d'une zone d'orientation ou d'une zone d'éboutage.

13. Convoyeur transversal selon l'une des revendications 1 à 12, **caractérisé en ce que** l'unité de support d'entraînement (2) présente un guidage supplémentaire pour d'autres niveaux de transport.
